# FASCICULE DE BREVET EUROPEEN

(11) **EP 4 374 340 B1**
(45) Date de publication et mention de la délivrance du brevet: **29.07.2026**
(21) Numéro de dépôt: 22741331.7
(22) Date de dépôt: 14.06.2022
(51) Int. Cl.: G06V 20/59, G06V 20/56, G06V 40/18

(54) **PROCÉDÉ ET DISPOSITIF DE CONTRÔLE D'OUVERTURE DE PORTE DE VÉHICULE**
VERFAHREN UND VORRICHTUNG ZUR STEUERUNG DES ÖFFNENS EINER FAHRZEUGTÜR
METHOD AND DEVICE FOR CONTROLLING THE OPENING OF A VEHICLE DOOR

(30) Priorité: 21.07.2021 FR 2107832
(43) Date de publication de la demande: 29.05.2024
(73) Titulaire: Stellantis Auto SAS, 78300 Poissy (FR)
(72) Inventeur: OJEDA, Luciano, 75005 PARIS (FR); MAFRICA, Stefano, 92100 BOULOGNE BILLANCOURT (FR); RAHMAN, Nida, 95190 GOUSSAINVILLE (FR); TOUMI, Ahmed, 92400 COURBEVOIE (FR)
(74) Mandataire: ESIP
(86) Numéro de dépôt international: PCT/FR2022/051131
(87) Numéro de publication internationale: WO 2023/002098

(56) Documents cités:
- CN-A- 109 808 640
- CN-U- 204 526 976

## Description

### Domaine technique

L'invention concerne les procédés et dispositifs de contrôle d'ouverture de porte de véhicule. L'invention concerne également un procédé et un dispositif de détermination de l'attention d'un utilisateur d'un véhicule avant l'ouverture d'une porte du véhicule. L'invention concerne également un procédé et un dispositif d'alerte du conducteur en cas d'inattention de l'utilisateur.

### Arrière-plan technologique

La sécurité routière est un des enjeux importants dans le cadre du développement des véhicules. Avec le développement et la diversification des moyens et modes de transport, le réseau routier est aujourd'hui utilisé par différents types de véhicules, par exemple les véhicules automobiles, les motos, les vélos, les trottinettes, en plus des piétons se déplaçant sur les trottoirs et parfois la chaussée. Ces différents types de véhicule partagent parfois de mêmes voies de circulation, ce qui pose des problèmes de sécurité, notamment pour les utilisateurs les plus fragiles correspondant à ceux qui se déplacent à vélo, moto ou trottinette par exemple.

Un des risques importants pour les piétons et utilisateurs se déplaçant à vélo, moto ou trottinette est posé par l'ouverture soudaine des portes de voiture sur le trottoir ou sur la chaussée, une telle ouverture pouvant surprendre ces utilisateurs arrivant par l'arrière de la voiture et dans le pire des cas provoquer une collision lorsque ces utilisateurs n'ont pas le temps de réagir pour éviter une porte ouverte sur la chaussée.

Pour faire face à ces problèmes de sécurité, et notamment aux problèmes d'ouverture de porte(s) sur la chaussée, des solutions ont vu le jour ces dernières années, notamment pour prévenir les risques de collisions entre les utilisateurs les plus fragiles et ceux protégés par une carrosserie. Parmi ces solutions, certains constructeurs envisagent la projection de messages ou contenus d'avertissement sur la chaussée avant l'ouverture d'une porte pour alerter les autres utilisateurs de la chaussée du danger inhérent à l'ouverture de la porte.

Ce type de solution peut cependant s'avérer insuffisant, notamment en cas d'inattention des utilisateurs dits fragiles.

D'autres solutions ont été envisagées par les constructeurs automobiles pour limiter les risques de collision de personnes avec une portière d'un véhicule, par exemple l'ajout d'un ou plusieurs capteurs configurés pour détecter l'approche d'objets mobiles par l'arrière sur les côtés du véhicule, tel que divulgué dans le document CN 204 526 976 U.

Ces solutions sont cependant couteuses car elles requièrent l'ajout de capteurs supplémentaires, la portée de la détection étant par ailleurs limitée en distance.

Il existe également des procédés de contrôle et déverrouillage d'une porte d'un véhicule en fonction de la reconnaissance de visage, tels que divulgués dans le document CN 109 808 640 A.

### Résumé de l'invention

Un objet de la présente invention est de résoudre au moins un des inconvénients de l'arrière-plan technologique.

Un objet de la présente invention est d'améliorer la sécurité pour les utilisateurs d'un véhicule ainsi que pour les autres usagers de la route ou des trottoirs se déplaçant dans l'environnement du véhicule.

Un autre objet de la présente invention est d'améliorer l'attention d'un utilisateur du véhicule quant à son environnement.

Selon un premier aspect, l'invention concerne un procédé de contrôle d'ouverture d'une porte d'un véhicule, le véhicule étant à l'arrêt, le procédé étant mis en œuvre par au moins un processeur embarqué dans le véhicule, le procédé comprenant les étapes suivantes :
- détection d'une commande d'ouverture de la porte ;
- détermination d'un ensemble de directions d'un regard d'un passager assis dans un siège du véhicule associé à la porte pendant une première durée déterminée précédant un instant temporel associé à la détection de commande d'ouverture de la porte à partir de données reçues d'un système de contrôle d'attention de conducteur, dit système DMS ;
- comparaison de l'ensemble de directions du regard avec une direction d'observation d'un rétroviseur du véhicule associé à la porte par le passager ;
- contrôle de l'ouverture de la porte en fonction d'un résultat de la comparaison.

Selon une variante, le contrôle de l'ouverture de la porte comprend :
- un verrouillage de l'ouverture de la porte pendant une deuxième durée déterminée lorsque le résultat de la comparaison indique que, pendant la première durée déterminée, le passager ne maintient pas son regard en direction du rétroviseur pendant au moins une troisième durée déterminée ; et
- un déverrouillage de l'ouverture de la porte lorsque le résultat de la comparaison indique que, pendant la première durée déterminée, le passager maintient son regard en direction du rétroviseur pendant la au moins une troisième durée déterminée.

Selon une autre variante, le procédé comprend en outre une génération d'au moins une alerte haptique parmi les alertes suivantes lorsque l'ouverture de la porte est verrouillée :
- alerte visuelle au niveau de la porte ;
- alerte sonore dans un habitacle du véhicule ; et
- alerte vibratoire au niveau d'une poignée intérieure de la porte.

Selon une variante supplémentaire, le procédé comprend en outre une étape de détermination d'une localisation courante du véhicule, le contrôle de l'ouverture de la porte étant en outre fonction de la localisation courante.

Selon encore une variante, le procédé comprend en outre les étapes suivantes :
- acquisition d'au moins une image représentative d'un environnement devant le véhicule ;
- détermination d'un côté d'une voie de circulation sur lequel le véhicule est stationné en fonction de la au moins une image,
le contrôle de l'ouverture de la porte étant en outre fonction du côté sur lequel le véhicule est stationné et d'un côté du véhicule sur lequel la porte est arrangée.

Selon une variante additionnelle, le contrôle d'ouverture de la porte est activé lorsque la porte correspond à la porte s'ouvrant sur la voie de circulation.

Selon un deuxième aspect, l'invention concerne un dispositif de contrôle d'ouverture d'une porte d'un véhicule, le dispositif comprenant une mémoire associée à un processeur configuré pour la mise en œuvre des étapes du procédé selon le premier aspect de l'invention.

Selon un troisième aspect, l'invention concerne un système de contrôle d'ouverture d'une porte d'un véhicule, le système comprenant le dispositif tel que décrit ci-dessus selon le deuxième aspect de l'invention et un système de contrôle d'attention de conducteur, dit système DMS.

Selon un quatrième, l'invention concerne un véhicule, par exemple de type automobile, comprenant un dispositif tel que décrit ci-dessus selon le deuxième aspect de l'invention ou un système tel que décrit ci-dessus selon le troisième aspect de l'invention.

Selon un cinquième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 4 annexées, sur lesquelles :
[Fig. 1] illustre schématiquement une partie d'habitacle d'un véhicule équipé d'un système DMS, selon un exemple de réalisation particulier de la présente invention ;
[Fig. 2] illustre schématiquement un champ de vision associé à un utilisateur du véhicule de la figure 1, selon un exemple de réalisation particulier de la présente invention ;
[Fig. 3] illustre schématiquement un dispositif configuré pour contrôler l'ouverture d'une porte du véhicule de la figure 1, selon un exemple de réalisation particulier de la présente invention ;
[Fig. 4] illustre un organigramme des différentes étapes d'un procédé de contrôle de l'ouverture d'une porte du véhicule de la figure 1, selon un exemple de réalisation particulier de la présente invention.

### Description des modes de réalisation

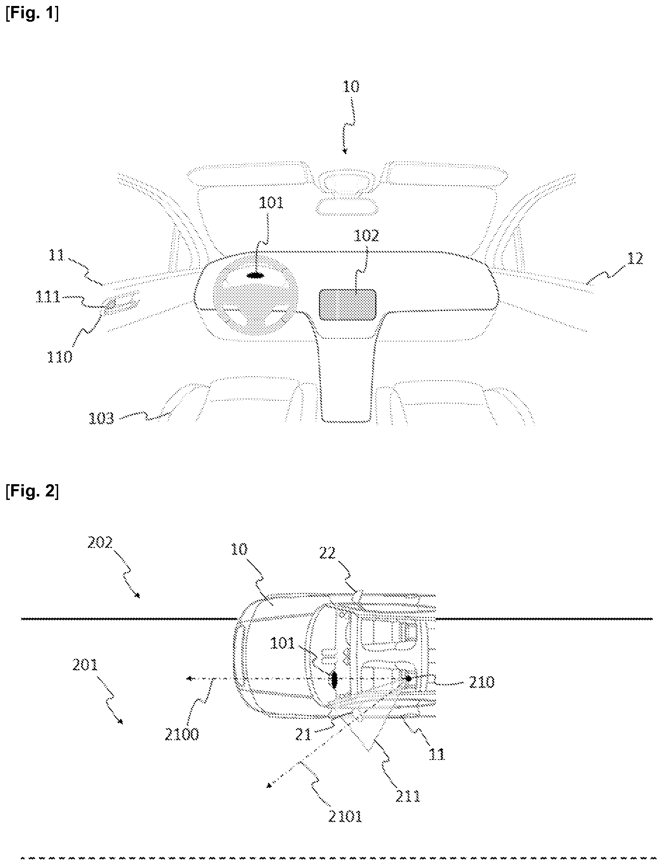

Un procédé et un dispositif de contrôle de l'ouverture d'une porte d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de l'invention, le contrôle de l'ouverture d'une porte (aussi appelée portière) d'un véhicule à l'arrêt, par exemple stationné sur le bord d'une voie de circulation ou chaussée, comprend la détection d'une commande d'ouverture de porte. Une telle commande est par exemple reçue d'un calculateur lorsqu'un passager du véhicule actionne la poignée de la porte dans le but de l'ouvrir. Un ensemble de directions d'un regard d'un passager assis dans un siège du véhicule associé à la porte sont déterminées à partir de données reçues d'un système de contrôle d'attention de conducteur, dit système DMS. Cet ensemble de directions du regard correspondent avantageusement aux directions prises par le regard du passager pendant une première durée déterminée précédant l'instant temporel associé à la détection de commande d'ouverture de la porte, la première durée déterminée étant par exemple égale à quelques secondes, par exemple 5 secondes. Cet ensemble de directions du regard du passager est comparé à la direction associée à l'observation d'un rétroviseur par le passager, par exemple pour déterminer si le passager a effectivement observé le rétroviseur extérieur durant la première durée déterminée. En fonction du résultat de la comparaison, l'ouverture de la porte est contrôlée, c'est-à-dire par exemple l'ouverture est autorisée ou la porte est maintenue verrouillée pour empêcher le passager d'ouvrir cette porte.

Un tel contrôle d'une porte de véhicule présente l'avantage d'autoriser ou non l'ouverture de la porte par un passager après avoir vérifié que le passager a effectivement porté son attention sur l'environnement du véhicule avant d'ouvrir la porte. Cette vérification est obtenue en utilisant les données d'un système DMS équipant le véhicule, ne nécessitant l'ajout d'aucun composant matériel, ce qui réduit le coût du système tout en améliorant la sécurité des usagers se déplaçant autour du véhicule.

Un système DMS correspond à un système de sécurité en charge de contrôler l'attention du conducteur. Un tel système est connu sous le nom de système DMS (de l'anglais « Driver Monitoring System ») et est aussi appelé moniteur d'attention du conducteur ou encore système d'alerte de fatigue du conducteur, un tel système permettant de surveiller l'attention du conducteur et d'alerter ce dernier lorsqu'un endormissement ou une baisse de l'attention est détectée. Le système DMS comporte une ou plusieurs caméras détectant l'orientation de la tête et/ou du regard du conducteur pour en déduire si le conducteur est attentif, c'est-à-dire s'il regarde dans une direction donnée, et/ou si le conducteur s'endort en détectant les fermetures ou les clignotements des yeux. Un tel système DMS correspond à un système de série sur de plus en plus de véhicules et tend à se généraliser, la Commission européenne ayant par ailleurs comme projet d'imposer l'intégration d'un tel système dans les véhicules circulant en Europe.

[Fig. 1] illustre schématiquement une partie d'habitacle d'un véhicule 10 équipé d'un système DMS 101, selon un exemple de réalisation particulier et non limitatif de la présente invention.

La figure 1 présente une vue de l'intérieur d'un véhicule 10, notamment de la partie avant de l'habitacle du véhicule 10 comprenant notamment le volant, la planche de bord de bord, le siège conducteur et le siège passager avant (respectivement siège avant gauche et siège avant droit selon l'exemple de la figure 1) et le pare-brise du véhicule 10. La figure 1 illustre également une porte avant gauche 11 du véhicule 10 associée au siège conducteur (c'est-à-dire arrangée du côté du siège conducteur et permettant au conducteur de sortir du véhicule 10 ou d'y entrer pour accéder au siège conducteur) et une porte avant droit 12 du véhicule 10 associée au siège passager avant (c'est-à-dire arrangée du côté du siège passager avant et permettant au passager avant de sortir du véhicule 10 ou d'y entrer pour accéder au siège passager avant).

Chaque porte 11 et 12 comprend un dispositif intégré permettant d'actionner le mécanisme d'ouverture de la porte 11, 12. Par exemple, la porte 11 comprend une poignée 110 qui lorsqu'elle est actionné par le conducteur ou passager du véhicule 10 assis dans le siège 103 du côté de cette porte 11 déclenche l'ouverture de la porte 11 en libérant le mécanisme assurant le maintien de la porte 11 en position fermée. Lorsque le véhicule 10 est verrouillé de l'intérieur, l'actionnement de la poignée 110 déclenche la transmission d'un signal de commande au calculateur en charge du contrôle de verrouillage/déverrouillage des ouvrants du véhicule 10 requérant le déverrouillage du véhicule 10, ou pour le moins le déverrouillage de la porte 11.

Un dispositif 111 est par exemple associé à la poigné 110, ce dispositif 111 étant configuré pour alerter le conducteur ou passager assis dans le siège d'un potentiel danger associé à l'ouverture de la porte. Ce dispositif 111 correspond par exemple à un témoin lumineux comprenant une ou plusieurs diodes électroluminescentes, dites LED (de l'anglais « Light-Emitting Diode ») qui s'éclaire lorsque le conducteur ou passager actionne la poignée et qu'un problème ou danger est détecté, comme cela sera expliqué avec plus de détails en regard de la figure 2.

Le véhicule 10 correspond par exemple à un véhicule à moteur thermique, à moteur(s) électrique(s) ou encore un véhicule hybride avec un moteur thermique et un ou plusieurs moteurs électriques. Le véhicule 1 correspond ainsi par exemple à un véhicule terrestre, par exemple une automobile, un camion, un car.

Le véhicule 10 correspond selon une variante de réalisation à un véhicule autonome, l'expression véhicule autonome englobant également la notion de véhicule semi-autonome, c'est-à-dire à un véhicule circulant par exemple avec un niveau d'autonomie supérieur au niveau 2 ou au niveau 3. Le niveau d'autonomie du véhicule 10 correspond par exemple à un des 5 niveaux de la classification selon l'agence fédérale américaine chargée de la sécurité routière ou à un des 6 niveaux de la classification de l'organisation internationale des constructeurs automobiles.

Le véhicule 10 embarque également avantageusement des moyens 101 de suivi de la direction ou de l'orientation du regard ou de la tête du conducteur. De tels moyens correspondent avantageusement à un système DMS 101.

Le système DMS 101 comprend par exemple une ou plusieurs caméras configurées pour l'acquisition de données représentatives du visage d'un passager du véhicule 10, par exemple le conducteur assis dans le siège conducteur, par exemple des images du visages, des données relatives à certains points du visage, des données relatives à certaines parties du visage (par exemple les yeux, les paupières). La ou les caméras correspondent par exemple à une ou plusieurs des dispositifs d'acquisition suivants :
- caméra infrarouge ;
- caméra d'acquisition d'image de type RGB (de l'anglais « Red, Green, Blue » ou en français « Rouge, vert, bleu ») ;
- caméra d'acquisition d'image associée à un ou plusieurs dispositifs (par exemple une ou plusieurs LED (de l'anglais « Light-Emitting Diode » ou en français « Diode électroluminescente ») émettant de la lumière dans l'infrarouge ou dans la bande proche de l'infrarouge.

Le système DMS 101 met en œuvre un ensemble de fonctions primaires assurant par exemple le suivi du regard du conducteur (de l'anglais « gaze tracking »), la détermination ou le suivi de la posture de la tête du conducteur (de l'anglais « head pose » ou « head gaze ») et/ou le suivi du visage (de l'anglais « face tracking »).

De telles fonctions s'appuient sur les données obtenues de la ou les caméras pour par exemple :
- détecter les yeux dans le visage et déterminer la direction associée au regard du conducteur (détection d'inattention) ;
- déterminer la fréquence de fermeture des paupières et la durée pendant laquelle les paupières sont fermées (détection d'endormissement) ;
- déterminer la posture de la tête et ainsi déterminer dans quelle direction regarde le conducteur (détection d'inattention).

Selon un exemple particulier de réalisation, le véhicule 10 embarque en outre un système de géolocalisation par satellite configuré pour déterminer la position courante du véhicule 10, le véhicule 10 embarquant à cet effet un récepteur d'un système de type GPS (de l'anglais « Global Positioning System » ou en français « Système mondial de positionnement ») ou Galileo par exemple en communication avec un calculateur du système embarqué du véhicule 10. Selon une variante, le récepteur du système de géolocalisation est embarqué dans un dispositif de communication mobile, tel qu'un téléphone intelligent (de l'anglais « Smartphone »). Selon cette variante, le dispositif de communication mobile est relié en communication avec le véhicule 10, par exemple en communication sans fil (en Bluetooth^{®} ou en Wifi^{®} par exemple) via une unité de contrôle télématique, dite TCU (de l'anglais « Telematic Control Unit »), elle-même reliée à un ou plusieurs calculateurs du système embarqué du véhicule 10. Selon cette variante, le véhicule 10 est en mesure de déterminer sa position ou localisation géographique à partir de données reçues du dispositif de communication mobile.

Selon un autre exemple particulier de réalisation, le véhicule 10 embarque en outre une caméra ayant dans son champ de vision une partie de l'environnement extérieur du véhicule 10, par exemple l'environnement situé devant le véhicule 10 en référence au sens de circulation du véhicule 10. La caméra correspond par exemple à une caméra de pare-brise ou à une caméra montée à l'avant du véhicule 10, par exemple au niveau de la calandre avant du véhicule 10. Selon une variante, le véhicule 10 est équipé de plusieurs caméras, par exemple, 2 ou 4 caméras (par exemple une caméra ayant dans son champ de vision l'environnement extérieur arrière du véhicule 10 et une caméra ayant dans son champ de vision l'environnement extérieur avant du véhicule 10 et/ou des caméras latérales du véhicule 10 ayant dans leur champ de vision l'environnement extérieur gauche / droit du véhicule 10). Chaque caméra est configurée pour l'acquisition de données représentatives de l'environnement extérieur du véhicule dans son champ de vision. Ces données correspondent par exemple aux données d'acquisition d'une grille de capteurs photosensibles, par exemple des données de niveaux de gris pour chaque canal couleur RGB par exemple (de l'anglais « Red, Green, Blue » ou en français « Rouge, vert, bleu »). Ces caméras, ou une partie d'entre elles, correspondent par exemple à des caméras d'un ou plusieurs systèmes d'aide à la conduite du véhicule 10, connus sous le nom de systèmes dits ADAS (de l'anglais « Advanced Driver-Assistance System » ou en français « Système d'aide à la conduite avancé »).

Selon encore un exemple de réalisation particulier, le véhicule 10 embarque un système embarqué comprenant un ensemble de calculateurs reliés entre eux pour former une architecture multiplexée pour la réalisation de différents services utiles pour le bon fonctionnement du véhicule, notamment pour le contrôle de l'ouverture d'une ou plusieurs portes selon le processus ou procédé décrit(s) ci-dessous, à partir de données reçues du système DMS 101 et de différents capteurs embarqués dans le véhicule 10 (par exemple capteur d'ouverture de porte par l'intérieur, caméra, récepteur GPS) et reliés aux calculateurs formant le système embarqué du véhicule 10. Le ou les calculateurs, les capteurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le véhicule 10 embarque également un écran d'affichage 102, par exemple tactile et par exemple intégré dans la planche de bord du véhicule 10. L'écran d'affichage 102 correspond par exemple à un écran de type LCD (de l'anglais « Liquid Crystal Display » ou en français « Affichage à cristaux liquides »), par exemple de type de type TFT (de l'anglais « Thin-Film Transistor » ou en français « Transistor en film mince »), ou OLED (de l'anglais « Organic Light-Emitting Diode » ou en français « Diode électroluminescente organique »). L'écran d'affichage 102 est par exemple arrangé au centre du tableau de bord, par exemple au-dessus d'une façade centrale. Bien entendu, la position de l'écran d'affichage 102 n'est pas limitée à cet exemple, l'écran d'affichage 102 pouvant être arrangée en toute position, par exemple sur la façade centrale.

L'écran d'affichage 102 permet d'afficher des contenus à destination du conducteur et des passagers du véhicule 10. L'écran 102 est également configuré pour permettre au conducteur et/ou aux passagers du véhicule 10 d'interagir avec un ou plusieurs systèmes embarqués dans le véhicule via une interface homme machine (IHM) affichée sur l'écran. Par exemple, l'écran 102 permet de contrôler le système d'infodivertissement, aussi appelé système IVI (de l'anglais « In-Vehicle Infotainment » ou en français « Infodivertissement embarqué ») du véhicule 10, ainsi que par exemple le système en charge du contrôle d'ouverture des portes 11, 12 du véhicule 10, tel que cela est décrit avec plus de détails en regard de la figure 2 ci-dessous.

Selon une variante de réalisation, l'écran d'affichage 102 n'est pas intégré au véhicule 10 mais correspond à un écran d'un dispositif de communication mobile, tel qu'un téléphone intelligent ou une tablette, relié en communication, par exemple sans fil, avec le système embarqué du véhicule 10.

[Fig. 2] illustre schématiquement le véhicule 10 dans son environnement, selon un exemple de réalisation particulier et non limitatif de la présente invention.

La figure 2 illustre le véhicule 10 (la partie avant du véhicule 10 pour plus de clarté) vue de dessus. Selon l'exemple particulier de la figure 2, le véhicule 10 est stationné sur un côté d'une voie de circulation 201. Plus spécifiquement, le véhicule 10 est stationné sur le côté droit de la voie de circulation selon le sens de circulation du véhicule 10 (de droite à gauche sur la figure 2). La porte avant gauche 11 du véhicule 10 est ainsi localisée du côté de la chaussée 201 sur laquelle peuvent circuler d'autres véhicules et la porte avant droit 12 du véhicule 10 est localisée du côté du trottoir 202 (ou bas-côté le cas échéant) sur lequel peuvent circuler des piétons, vélos ou trottinettes par exemple.

Un processus de contrôle d'ouverture d'une ou plusieurs portes du véhicule 10 est avantageusement mis en œuvre par un ou plusieurs dispositifs embarqués dans le véhicule 10, par exemple par un ou plusieurs calculateurs du système embarqué du véhicule 10. Selon une variante, le processus est mis en œuvre par un système comprenant le ou les calculateurs et un ou plusieurs autres dispositifs ou systèmes embarqués dans le véhicule 10, par exemple le système DMS 101, une ou plusieurs caméras et/ou un système de géolocalisation.

Le processus est décrit ci-dessous sur la base d'un exemple particulier et non limitatif, en l'occurrence pour le contrôle de l'ouverture de la porte avant gauche 11 correspondant à la porte conducteur. Bien entendu, le même processus s'applique de manière identique à toute porte du véhicule 10, que la porte soit à l'avant ou à l'arrière du véhicule 10.

Le contrôle d'ouverture des portes du véhicule 10 via le processus décrit ci-dessous est par exemple activable et/ou désactivable à la demande par un opérateur, par exemple par le conducteur ou un passager du véhicule 10. L'activation ou la désactivation du contrôle est par exemple obtenue par le contrôle d'un paramètre via une IHM, par exemple affichée sur l'écran 102. La désactivation est par exemple possible pour une durée déterminée (par exemple sur les prochaines 24, 48 ou 72 heures), indéfiniment jusqu'à réactivation via l'IHM ou jusqu'au prochain démarrage du véhicule 10.

Dans une première opération, le calculateur en charge du processus reçoit une commande d'ouverture de la porte 11. Cette commande d'ouverture de la porte est par exemple générée lorsqu'un passager du véhicule dans le siège 103 actionne la poignée 110 pour ouvrir la porte 11. Un capteur d'ouverture de porte associé à la poignée 110 transmet par exemple un signal au calculateur contrôlant le verrouillage/déverrouillage des portes du véhicule 10 pour requérir le déverrouillage de la porte 11. Le calculateur contrôlant le verrouillage/déverrouillage des portes du véhicule 10 transmet alors une requête d'ouverture de porte au calculateur en charge du processus via un bus de données. Selon une variante, le contrôle de verrouillage/déverrouillage des portes du véhicule 10 est mis en œuvre par le calculateur en charge du processus.

Dans une deuxième opération, le calculateur en charge du processus récupère ou collecte des données représentatives de l'ensemble de directions du regard du passager assis dans le siège 103 (lequel est associé à la porte 11 puisqu'attenant à la porte 11) pendant une première durée déterminée précédant l'instant temporel associé à la détection de la commande d'ouverture de la porte 11.

Ces données sont par exemple obtenues d'une mémoire associée au calculateur contrôlant le système DMS 101 du véhicule 10. Le système DMS 101 contrôle en continue ou à intervalles régulier l'attention du passager assis dans le siège 103 et stocke en mémoire les données représentatives des directions prises par le regard de ce passager.

Pour une direction du regard donnée, les données représentatives de direction du regard du conducteur correspondent par exemple à des valeurs d'angles entre la direction du regard du passager (selon un point de vue 210 associé à ce passager) à un instant 't' et l'axe de vision principale associé au point de vue 2100.

La première durée déterminée est par exemple égale à quelques secondes, par exemple 2, 3, 5, 7 ou 10 secondes. Cette première durée déterminée est avantageusement inférieure à la durée de conservation en mémoire des données représentatives de directions du regard. Par exemple, les données représentatives de direction du regard sont enregistrées et conservées en mémoire pour une durée égale à 5, 10, 30, 60 secondes, les données les plus anciennes étant écrasées ou remplacées par les données courantes.

Dans une troisième opération, l'ensemble de directions du regard collectées à la deuxième opération sont comparées avec une direction d'observation 2101 d'un rétroviseur extérieur 21 du véhicule 10 associé à la porte 11 selon le point de vue 210 associé au passager assis dans le siège 103 associé à la porte 11. Le rétroviseur 21 est dit associé à la porte 11 en ce qu'il correspond au rétroviseur extérieur arrangé sur la porte 11 ou pour le moins au rétroviseur extérieur du même côté que la porte 11, en l'occurrence le côté gauche selon l'exemple de la figure 2. Selon une même logique, le rétroviseur extérieur 22 (droit) est associé à la porte 12.

La direction d'observation 2101 du rétroviseur 21 selon le point de vue 210 correspond par exemple à l'axe de vision principale d'un cône de vision 211 (illustré par un triangle en grisé) lorsque le passager assis dans le siège 103 regarde en direction du rétroviseur extérieur 21.

Cette direction d'observation 2101 est avantageusement stockée en mémoire du calculateur en charge du processus de contrôle d'ouverture de la porte, par exemple via une valeur angulaire correspondant à l'angle entre l'axe de vision principale 2100 et l'axe de vision principale 2101 du cône de vision 211. Le cône de vision est quant à lui représenté par une valeur d'angle minimale et une valeur d'angle maximale représentant la variation angulaire autour de l'axe 2101 pour rester dans le cône de vision, ces valeurs d'angle minimale et maximale étant elles aussi enregistrées en mémoire.

La direction d'observation 2101 correspond à la droite passant par le point de vue 210 et un point du rétroviseur extérieur 21 (par exemple le centre du miroir du rétroviseur 21).

La comparaison entre l'ensemble de directions du regard collectées à la deuxième opération et cette direction d'observation a pour objectif de vérifier si le passager assis dans le siège 103 a regardé, ou non, en direction du rétroviseur extérieur 21 avant d'actionner la poignée 110 pendant une durée minimale (dite troisième durée déterminée) au moins égale à par exemple 0.5, 1 ou 2 secondes (sur l'intervalle de temps pendant lequel les directions du regard ont été obtenues, c'est-à-dire pendant la première durée déterminée).

Une telle comparaison comprend la recherche d'un intervalle de directions du regard consécutives (le nombre de directions consécutives du regard du passager dépendant de la fréquence d'acquisition de ces données par le système DMS 101 et de la troisième durée déterminée) comprises dans le cône de vision 211.

Dans une quatrième opération, l'ouverture de la porte 11 est contrôlée en fonction du résultat de la comparaison de la troisième opération.

Un tel contrôle comprend :
- un verrouillage de la porte 11 pour empêcher ou interdire son ouverture pendant une deuxième durée déterminée (égale à par exemple à 2, 3 ou 5 secondes) lorsque le résultat de la comparaison indique que, pendant la première durée déterminée, le passager ne maintient pas son regard en direction du rétroviseur extérieur pendant une durée au moins égale à la troisième durée déterminée ; par exemple, si le passager ne regarde pas du tout dans la direction du rétroviseur 21 ou regarde dans cette direction mais sans maintenir son regard pendant au moins 1 seconde par exemple, la porte 11 est verrouillée et le passager ne peut pas l'ouvrir ; le verrouillage de la porte 11 correspond par exemple à une activation du verrouillage lorsque la porte 11 n'était pas verrouillée ou à un maintien du verrouillage prolongé de la deuxième durée déterminée lorsque la porte 11 était déjà dans l'état verrouillé ; et
- un déverrouillage de l'ouverture de la porte lorsque le résultat de la comparaison indique que, pendant la première durée déterminée, le passager maintient son regard en direction du rétroviseur extérieur pendant une durée égale à la troisième durée déterminée (par exemple pendant une durée supérieure ou égale à 1 s).

Selon une variante de réalisation, lorsque le verrouillage de la porte 11 est activé ou maintenu pour empêcher ou interdire son ouverture pendant une deuxième durée déterminée, le contrôle de l'ouverture de la porte 11 comprend en outre (en plus du verrouillage de la porte 11) l'activation d'une ou plusieurs alertes pour alerter le passager qu'un danger potentiel relatif à l'ouverture de la porte 11 existe.

A cet effet, une ou plusieurs alertes avec effet haptique associé sont générées, parmi les alertes suivantes :
- alerte visuelle au niveau de la porte, par exemple affichage d'un ou plusieurs témoins lumineux intégrés dans la garniture de la porte 11 ; par exemple, une ou plusieurs LEDs 110 arrangées à proximité de la poignée 110 (par exemple à une distance inférieure à 10 ou 20 cm de la poignée) sont activées, par exemple de manière clignotante, pour rappeler au passager qu'il doit regarder dans le rétroviseur extérieur 21 avant d'ouvrir la porte 11 ; selon un autre exemple, le ou les témoins lumineux sont arrangés sur la garniture de la porte 11 dans la direction du rétroviseur 21 selon le point de vue 210 ;
- alerte sonore dans un habitacle du véhicule, par exemple une alerte sonore intermittente rendue par un ou plusieurs haut-parleurs arrangés dans l'habitacle du véhicule 10, par exemple par le ou les haut-parleurs arrangés du côté de la porte 11 que le passager tente d'ouvrir ; et
- alerte vibratoire au niveau de la poignée intérieure 110 de la porte 11, mis en œuvre par un ou plusieurs dispositifs vibratoires arrangés dans la poignée 110 ou sur la surface de la poignée 110.

La ou les alertes générées durent par exemple quelques secondes, par exemple 5 secondes. Si le passager regarde en direction du rétroviseur 21 (détecté par le système DMS) pendant une durée égale au moins à la troisième durée déterminée avant expiration du rendu des alertes, alors les alertes s'arrêtent automatiquement.

Selon une autre variante de réalisation, lorsque le verrouillage de la porte 11 est activé ou maintenu pour empêcher ou interdire son ouverture pendant une deuxième durée déterminée, le contrôle de l'ouverture de la porte 11 comprend en outre (en plus du verrouillage de la porte 11) un affichage, par exemple sur l'écran 102, un message pour expliquer au passager la raison du verrouillage et rappeler qu'il est nécessaire de vérifier dans le rétroviseur 21 qu'aucun danger n'est visible dans le rétroviseur 21 avant d'ouvrir la porte 11. Un tel message est affiché pendant une durée déterminée de quelques secondes, par exemple 3, 5 ou 7 secondes.

Selon un exemple particulier de réalisation, le passager peut désactiver le contrôle de l'ouverture des portes du véhicules via une IHM, par exemple affichée sur l'écran 102. Selon un autre exemple, un bouton virtuel est par exemple affiché sur l'écran 102 avec le message explicatif pour permettre par pression sur ce bouton de stopper la ou les alertes et déverrouiller la porte 11 pour permettre son ouverture.

Selon un mode de mise en œuvre particulier de l'invention, l'activation du contrôle de l'ouverture des portes du véhicule (de la porte 11 selon l'exemple illustratif de la figure 2), est conditionnée par la ou les conditions suivantes :
- détermination de la localisation courante du véhicule (à partir des données du récepteur du système GPS par exemple), le contrôle de l'ouverture de la porte étant fonction de cette localisation courante ; et/ou
- détermination du côté de la voie de circulation 102 sur lequel le véhicule 10 est stationné en fonction d'une ou plusieurs images acquises par la ou les caméras embarquées du véhicule 10, le contrôle de l'ouverture de la porte 11 étant fonction du côté sur lequel le véhicule 10 est stationné et du côté du véhicule 10 sur lequel la porte que le passager tente d'ouvrir est arrangée.

Par exemple, si la localisation courante du véhicule 10 permet de déterminer, par exemple en combinaison avec des données de cartographie, que le véhicule 10 est stationné dans un lieu ne nécessitant pas de contrôle de l'ouverture des portes, alors le contrôle de l'ouverture des portes tel que décrit ci-dessus est inhibé ou désactivé automatiquement.

Par exemple, la localisation courante est comparée avec une liste de localisations connues (par exemple entrées par le conducteur ou propriétaire du véhicule 10 via l'IHM) correspondant à des localisations pour lesquelles le contrôle n'est pas nécessaire (par exemple domicile du propriétaire du véhicule 10, parking privé, parking fermé, etc.). Si le résultat de la comparaison indique que la localisation correspond à une localisation de la liste, alors le contrôle est désactivé automatiquement.

Selon un autre exemple, la localisation courante est comparée à des données de cartographies pour déterminer si le véhicule se trouve dans un endroit ne nécessitant pas de contrôle d'ouverture des portes (parking, place de stationnement sécurisée et sans risque pour les autres usagers de la route, place de stationnement éloignée de toute voie de circulation, etc.). Si le résultat de la comparaison indique que la localisation correspond à un tel endroit, alors le contrôle est désactivé automatiquement, les opérations décrites ci-dessus n'étant pas mises en œuvre.

Dans les autres cas (autres localisations courantes), le processus de contrôle d'ouverture est mis en œuvre.

Selon un autre exemple, si le véhicule 10 est stationné sur le côté droit de la chaussée dans le sens de circulation sur cette chaussée et que la demande d'ouverture se fait côté trottoir 202 (porte 12), alors le contrôle n'est pas mis en œuvre et le passager peut ouvrir la porte 12 sans vérification du contrôle dans le rétroviseur 12, les opérations décrites ci-dessus n'étant pas mises en œuvre.

A contrario, si la demande d'ouverture se fait côté chaussée 201 et concerne la porte du côté de la chaussée (porte 11), alors le contrôle d'ouverture est activé et les opérations décrites ci-dessus sont mises en œuvre. Le contrôle d'ouverture de la porte est activé lorsque la porte correspond à la porte s'ouvrant sur la voie de circulation 201.

Le processus décrit ci-dessus est par exemple actif pendant une durée déterminée (par exemple 5 ou 10 minutes) après l'arrêt du véhicule 10 et la mise à l'arrêt du moteur du véhicule 10 (ou mise hors tension du véhicule 10 lorsque ce dernier est un véhicule électrique) avant de passer automatiquement dans un mode inactif pour par exemple ne pas consommer trop d'énergie de la batterie.

Un tel processus permet ainsi de s'assurer qu'un passager a bien vérifié qu'aucun usager n'arrive par l'arrière du véhicule 10 via les rétroviseurs avant d'autoriser l'ouverture d'une ou plusieurs portes, en s'appuyant sur des dispositifs ou systèmes déjà existant dans le véhicule 10.

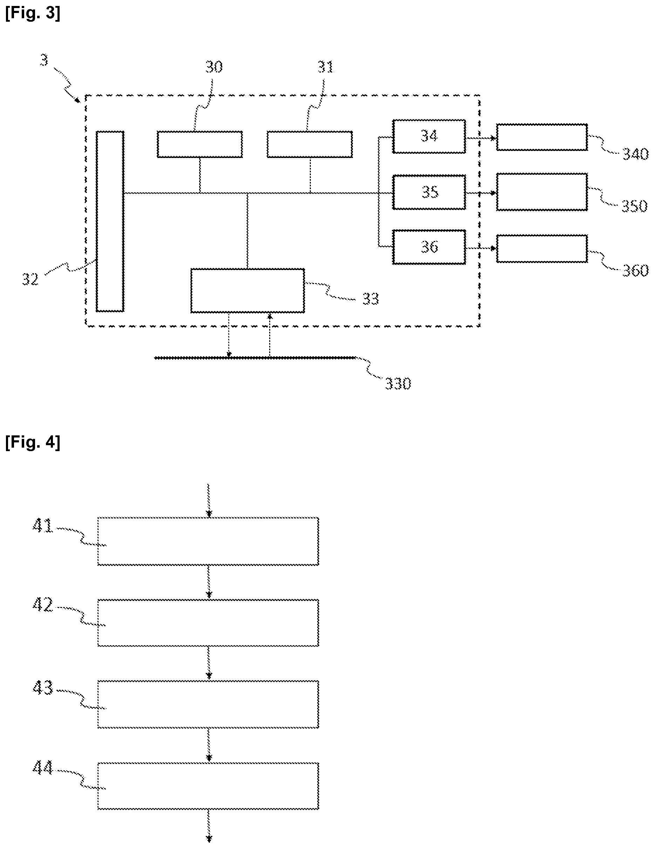

[Fig. 3] illustre schématiquement un dispositif 3 configuré pour contrôler l'ouverture d'une ou plusieurs portes du véhicule 10, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en œuvre des opérations décrites en regard des figure 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents modes de réalisation particuliers, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un mode de réalisation particulier et non limitatif, le dispositif 3 comprend un bloc 32 d'éléments d'interface pour communiquer avec des dispositifs externes, par exemple un serveur distant ou le « cloud », d'autres nœuds du réseau ad hoc. Les éléments d'interface du bloc 32 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre mode de réalisation particulier, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 3 peut fournir des signaux de sortie à un ou plusieurs dispositifs externes, tels qu'un écran d'affichage 340, un ou des haut-parleurs 350 et/ou d'autres périphériques 360 (système de projection) via respectivement des interfaces de sortie 34, 35 et 36. Selon une variante, l'un ou l'autre des dispositifs externes est intégré au dispositif 3.

[Fig. 4] illustre un organigramme des différentes étapes d'un procédé de contrôle d'ouverture d'une ou plusieurs portes d'un véhicule, par exemple le véhicule 10, selon un exemple de réalisation particulier et non limitatif de la présente invention. Le procédé est par exemple mis en œuvre par un dispositif embarqué dans le véhicule 10, par exemple par un ou plusieurs processeurs embarqués dans le véhicule 10, ou par le dispositif 3 de la figure 3.

Dans une première étape 41, une commande d'ouverture de la porte est détectée.

Dans une deuxième étape 42, un ensemble de directions d'un regard d'un passager assis dans un siège du véhicule associé à la porte sont déterminées pour une première durée déterminée précédant un instant temporel associé à la détection de commande d'ouverture de la porte à partir de données reçues d'un système de contrôle d'attention de conducteur, dit système DMS.

Dans une troisième étape 43, l'ensemble de directions du regard est comparé avec une direction d'observation d'un rétroviseur extérieur du véhicule associé à la porte par le passager.

Dans une quatrième étape 44, l'ouverture de la porte est contrôlée en fonction d'un résultat de la comparaison.

Selon une variante de réalisation, les variantes et exemples des opérations décrits en relation avec la figure 1 ou la figure 2 s'appliquent aux étapes du procédé de la figure 4.

Bien entendu, l'invention ne se limite pas aux modes de réalisation décrits ci-avant mais s'étend à un procédé de rendu d'une alerte en cas d'inobservation d'un rétroviseur qui inclurait des étapes secondaires sans pour cela sortir de la portée de la présente invention. **Il** en serait de même d'un dispositif configuré pour la mise en œuvre d'un tel procédé.

L'invention concerne également un système comprenant le dispositif 3 de la figure 3 relié en communication avec le système DMS 101, et optionnellement une caméra et/ou un dispositif de localisation.

L'invention concerne également un véhicule, par exemple automobile ou plus généralement un véhicule autonome à moteur terrestre, comprenant le dispositif 3 de la figure 3.

## Revendications

1. Procédé de contrôle d'ouverture d'une porte (11) d'un véhicule (10), ledit véhicule (10) étant à l'arrêt, ledit procédé étant mis en œuvre par au moins un processeur embarqué dans ledit véhicule, ledit procédé comprenant les étapes suivantes :
- détection (41) d'une commande d'ouverture de ladite porte (11) ;
- détermination (42) d'un ensemble de directions d'un regard d'un passager assis dans un siège (103) dudit véhicule associé à ladite porte (11) pendant une première durée déterminée précédant un instant temporel associé à ladite détection de commande d'ouverture de ladite porte (11) à partir de données reçues d'un système de contrôle d'attention de conducteur, dit système DMS (101) ;
- comparaison (43) dudit ensemble de directions du regard avec une direction d'observation (2101) d'un rétroviseur (21) dudit véhicule (10) associé à ladite porte (11) par ledit passager ;
- contrôle (44) de l'ouverture de ladite porte (11) en fonction d'un résultat de ladite comparaison (43).

2. Procédé selon la revendication 1, pour lequel ledit contrôle de l'ouverture de ladite porte (11) comprend :
- un verrouillage de l'ouverture de ladite porte (11) pendant une deuxième durée déterminée lorsque ledit résultat de la comparaison indique que, pendant ladite première durée déterminée, ledit passager ne maintient pas son regard en direction dudit rétroviseur (21) pendant au moins une troisième durée déterminée ; et
- un déverrouillage de l'ouverture de ladite porte (11) lorsque ledit résultat de la comparaison indique que, pendant ladite première durée déterminée, ledit passager maintient son regard en direction dudit rétroviseur (21) pendant ladite au moins une troisième durée déterminée.

3. Procédé selon la revendication 2, comprenant en outre une génération d'au moins une alerte haptique parmi les alertes suivantes lorsque l'ouverture de ladite porte (11) est verrouillée :
- alerte visuelle au niveau de ladite porte ;
- alerte sonore dans un habitacle dudit véhicule ; et
- alerte vibratoire au niveau d'une poignée intérieure de ladite porte.

4. Procédé selon l'une quelconque des revendications 1 à 3, comprenant en outre une étape de détermination d'une localisation courante dudit véhicule (10), ledit contrôle (44) de l'ouverture de ladite porte (11) étant en outre fonction de ladite localisation courante.

5. Procédé selon l'une quelconque des revendications 1 à 4, comprenant en outre les étapes suivantes :
- acquisition d'au moins une image représentative d'un environnement devant ledit véhicule (10) ;
- détermination d'un côté d'une voie de circulation (201) sur lequel ledit véhicule (10) est stationné en fonction de ladite au moins une image,
ledit contrôle (44) de l'ouverture de ladite porte étant en outre fonction dudit côté sur lequel ledit véhicule est stationné et d'un côté du véhicule sur lequel ladite porte (11) est arrangée.

6. Procédé selon la revendication 5, pour lequel ledit contrôle d'ouverture de ladite porte (11) est activé lorsque ladite porte (11) correspond à la porte s'ouvrant sur ladite voie de circulation (201).

7. Programme d'ordinateur comportant des instructions pour la mise en œuvre du procédé selon l'une quelconque des revendications précédentes, lorsque ces instructions sont exécutées par un processeur.

8. Dispositif (3) de contrôle d'ouverture d'une porte d'un véhicule, ledit dispositif (3) comprenant une mémoire (31) associée à au moins un processeur (30) configuré pour la mise en œuvre des étapes du procédé selon l'une quelconque des revendications 1 à 6.

9. Système de contrôle d'ouverture d'une porte d'un véhicule, ledit système comprenant ledit dispositif (3) selon la revendication 8 et un système de contrôle d'attention de conducteur, dit système DMS (101).

10. Véhicule (10) comprenant le dispositif (3) selon la revendication 8 ou le système selon la revendication 9.

## Patentansprüche

1. Verfahren zum Steuern des Öffnens einer Tür (11) eines Fahrzeugs (10), wobei das Fahrzeug (10) stillsteht, wobei das Verfahren durch mindestens einen Prozessor in dem Fahrzeug durchgeführt wird, wobei das Verfahren die folgenden Schritte umfasst:
- Detektieren (41) eines Öffnungsbefehls der Tür (11);
- Bestimmen (42) eines Satzes von Richtungen eines Blickes eines Fahrgastes, der in einem Sitz (103) des Fahrzeugs sitzt, das der Tür (11) zugeordnet ist, für eine erste bestimmte Zeitdauer, die einem mit der Steuerdetektion verbundenen Zeitpunkt vorausgeht zum Öffnen der Tür (11) aus Daten, die von einem System zur Überwachung der Fahreraufmerksamkeit, dem so genannten DMS-System (101), empfangen werden;
- Vergleich (43) des Satzes von Blickrichtungen mit einer Beobachtungsrichtung (2101) eines Rückspiegels (21) des Fahrzeugs (10), das der Tür (11) durch den Fahrgast zugeordnet ist;
- Kontrolle (44) des Öffnens der Tür (11) in Abhängigkeit von einem Ergebnis des Vergleichs (43).

2. Verfahren nach Anspruch 1, bei dem das Prüfen der Öffnung der Tür (11) umfasst:
- Sperren der Öffnung der Tür (11) für eine zweite bestimmte Zeitdauer, wenn das Vergleichsergebnis anzeigt, dass der Fahrgast während der ersten bestimmten Zeitdauer seinen Blick nicht in Richtung des Rückspiegels (21) für mindestens eine dritte bestimmte Zeitdauer hält; und
- Entriegeln der Öffnung der Tür (11), wenn das Vergleichsergebnis anzeigt, dass der Fahrgast seinen Blick in Richtung des Rückspiegels (21) während der ersten bestimmten Zeitdauer zumindest für eine dritte bestimmte Zeitdauer hält.

3. Verfahren nach Anspruch 2, das des Weiteren das Erzeugen von mindestens einem der folgenden haptischen Alarme umfasst, wenn das Öffnen der Tür (11) verriegelt ist:
- sichtbarer Alarm an der Tür;
- akustischer Alarm in einem Fahrgastraum des Fahrzeugs; und
- Vibrationsalarm an einem inneren Handgriff der Tür.

4. Verfahren nach einem der Ansprüche 1 bis 3, das des Weiteren einen Schritt des Bestimmens einer aktuellen Position des Fahrzeugs (10) umfasst, wobei die Steuerung (44) der Öffnung der Tür (11) des Weiteren von der aktuellen Position abhängt.

5. Verfahren nach einem der Ansprüche 1 bis 4, das des Weiteren die folgenden Schritte umfasst:
- Erfassen von mindestens einem Bild, das eine Umgebung vor dem Fahrzeug (10) darstellt;
- Bestimmen einer Seite einer Fahrspur (201), auf der das Fahrzeug (10) geparkt ist, in Abhängigkeit von dem mindestens einen Bild,
wobei die Steuerung (44) der Öffnung der Tür ferner in Abhängigkeit von der Seite, auf der das Fahrzeug geparkt ist, und einer Seite des Fahrzeugs, auf der die Tür (11) angeordnet ist, erfolgt.

6. Verfahren nach Anspruch 5, bei dem die Öffnungssteuerung der Tür (11) aktiviert wird, wenn die Tür (11) der Tür entspricht, die sich in die Fahrspur (201) öffnet.

7. Computerprogramm mit Anweisungen zur Durchführung des Verfahrens nach einem der vorhergehenden Ansprüche, wenn diese Anweisungen von einem Prozessor ausgeführt werden.

8. Vorrichtung (3) zum Steuern des Öffnens einer Tür eines Fahrzeugs, wobei die Vorrichtung (3) einen Speicher (31) umfasst, der mit mindestens einem Prozessor (30) verbunden ist, der zur Durchführung der Schritte des Verfahrens nach einem der Ansprüche 1 bis 6 konfiguriert ist.

9. System zum Steuern des Öffnens einer Fahrzeugtür, wobei das System die Vorrichtung (3) nach Anspruch 8 und ein System zum Steuern der Aufmerksamkeit des Fahrers, das so genannte DMS-System (101), umfasst.

10. Fahrzeug (10) mit der Vorrichtung (3) nach Anspruch 8 oder dem System nach Anspruch 9.

## Claims

1. Method for controlling the opening of a gate (11) of a motor vehicle (10), said motor vehicle (10) being in the shutdown, said method being implemented by at least one processor on board said motor vehicle, said method comprising the steps of:
- detecting (41) an opening order of said gate (11);
- determining (42) a set of managements of a look of a passenger seated in a seat (103) of said motor vehicle associated with said gate (11) for a first determined period preceding a time instant associated with said detection of the opening order of said gate (11) from data received from a driver's attention control system, said DMS system (101);
- comparing (43) said set of managements of the look with an observation management (2101) of a rear-view mirror (21) of said vehicle (10) associated with said gate (11) by said passenger;
- control (44) of the opening of said gate (11) as a function of a result of said comparison (43).

2. Method according to claim 1, wherein said control of the opening of said gate (11) comprises:
- locking the opening of said gate (11) for a second determined period when said result of the comparison indicates that, during said first determined period, said passenger does not keep his gaze in management with said rear-view mirror (21) for at least a third determined period; and
- unlocking the opening of said gate (11) when said result of the comparison indicates that, during said first determined period, said passenger keeps his gaze in management with said rear-view mirror (21) for said at least a third determined period.

3. Method according to claim 2, further comprising generating at least one haptic warning comprising the warnings of:
- visual warning to the level of said gate;
- audible warning in a passenger compartment of said gate; and
- vibratory into the warning of an inner handle of said level.

4. Method according to any one of claims 1 to 3, further comprising a step of determining a current location of said vehicle (10), said control (44) of the opening of said gate (11) also being a function of said current location.

5. Method according to any one of claims 1 to 4, further comprising the steps of:
- acquiring at least one image representative of an environment in front of said vehicle (10);
- determining a side of a taxiway (201) on which said vehicle (10) is parked as a function of said at least one image,
said control (44) of the opening of said gate also being a function of said side on which said vehicle is parked and of a side of the vehicle on which said gate (11) is arranged.

6. Method according to claim 5, wherein said opening control of said gate (11) is activated when said gate (11) corresponds to the gate opening onto said taxiway (201).

7. Computer plan comprising instructions for the implementation of the method according to any one of the previous claims, when these instructions are executed by a processor.

8. Device (3) for controlling the opening of a gate of a vehicle, said device (3) comprising a memory (31) associated with at least one processor (30) configured for implementing the steps of the method according to any one of claims 1 to 6.

9. System for controlling the opening of a gate of a vehicle, said system comprising said device (3) according to claim 8 and a driver attention control system, called DMS system (101).

10. Vehicle (10) comprising the device (3) according to claim 8 or the system according to claim 9.
